# EUROPEAN PATENT APPLICATION

(11) **EP 4 187 730 A1**
(43) Date of publication of application: **31.05.2023**
(21) Application number: 22208553.2
(22) Date of filing: 21.11.2022
(51) Int. Cl.: H02G 3/08

(54) **INSERT FOR AN INSTALLATION BOX**

(30) Priority: 24.11.2021 NL 2029888
(71) Applicant: Attema B.V., 4203 NJ Gorinchem (NL)
(72) Inventor: DE HOOG, Antonie, 4203 NJ Gorinchem (NL)
(74) Representative: EP&C

(57) **Abstract**

An insert for an installation box for an electrical installation has a box wall part and an elongate spout part, wherein the box wall part comprises a first side and a second side, a central axis extending from a first end to a second end of the box wall part, wherein the spout part is connected to the second side of the box wall part and extends from the wall hole on said second side, the spout part comprising a spout wall having a first spout end connected to the second side of the box wall part and a free, second spout end, a central longitudinal axis extending substantially perpendicular to the central axis of the box wall part, and an internal cross-sectional area for accommodating a pipe member to be inserted into the spout part at the second end thereof, wherein the spout wall is pivotable relative to the box wall part about a single pivot axis, the pivot axis extending substantially parallel to the central axis of the box wall part, wherein in use the single pivot axis is substantially perpendicular to the wall into which the installation box is to be installed.

## Description

### FIELD OF THE INVENTION

The invention relates to the field of electrical installation material, and more specifically to an installation box and an installation component for mounting in a wall. The wall may be a ceiling or a floor of a room. The invention further relates to an insert for an installation box.

Herein, an installation box is deemed equivalent to an electrical installation box, a junction box, and an electrical junction box. The installation box may be used for housing installation material in general, (junctions between) electrical conductors, electrical signal wires, optical cables or fibers, and may further accommodate switching material, one or more electrical or optical sockets, signaling material, telecommunication material, building automation material, controller or computer material, and the like.

### BACKGROUND OF THE INVENTION

In installations of the kind described above, electrical and/or optical wires are fitted in tubes, or pipes, of different sorts, where such tubes are inserted in spouts of installation boxes to form a continuous space comprising the space defined by the tubes and the space defined by the installation boxes. The wires lie protected in the continuous space in accordance with safety standards and other regulations in the applicable field.

The tubes sizes are generally standardized. In particular, the outer sizes of the tubes are standardized to be able to provide installation boxes having spouts in which such tubes fit. As an example, tubes having a circular cross-section are sized to have a particular outer diameter.

In installations, different kinds of tubes and different qualities of tubes from different manufacturers may be used. Tubes may be made from metal or from a plastic material. In plastic material, tubes may be rigid or flexible (ribbed).

A problem exists in installing the installation box and the tubes in a wall. Usually the installation box is installed in a box hole in a wall that is provided therein, for example by drilling or milling. The tubes may for example be provided in a tube slot that is milled in the wall. The tube slot for the tube is connected to the box hole for the installation box. It may occur that upon connecting the tube to the installation box the installation person discovers that the tube slot and the box hole are not sufficiently aligned. In order to make up for this misalignment the installation person has to remove extra material from the wall to be able to connect the tube to the installation box. This is time consuming and therefore inefficient. Plus afterwards the extra removed material leaves a bigger hole in the wall which has to be filled and flattened.

### SUMMARY OF THE INVENTION

It would be desirable to at least partially remove the above problems.

To better address one or more of these concerns, in a first aspect of the invention an insert for an installation box for an electrical installation is provided. The installation box has a box wall having a box wall opening, wherein the insert comprises a box wall part configured to the mounted on the box wall opening, and an elongate spout part, wherein:
- the box wall part comprises:
   ∘ a first side configured to face the installation box and
   ∘ a second side opposite to the first side,
   ∘ a central axis extending from a first end to a second end of the box wall part,
   ∘ a wall hole, the wall hole being configured to overlap with the box wall opening when the box wall part is mounted on the installation box,
- the spout part is connected to the second side of the box wall part and extends from said second side, the spout part comprising:
   ∘ a spout wall having a first spout end connected to the second side of the box wall part and a free, second spout end,
   ∘ a central longitudinal axis extending substantially perpendicular to the central axis of the box wall part,
   ∘ an internal cross-sectional area for accommodating a pipe member to be inserted into the spout part at the second spout end thereof,
   wherein the spout wall is pivotable relative to the box wall part about a single pivot axis, the pivot axis extending substantially parallel to the central axis of the box wall part, wherein in use the single pivot axis is substantially perpendicular to the wall into which the installation box is to be installed.

The insert may provide a more efficient installation of the pipe member and the installation box when the milled slot for the pipe member and the box hole for the installation box are insufficiently aligned. In case of an insufficient alignment between the milled slot for the pipe member and the box hole of the installation box the pivotability of the spout wall allows the installation person to remove less material from the wall. This may save time compared to an insert not having said pivotability.

The box wall part being pivotable about the single pivot axis that is substantially parallel to the central axis of the box wall part prevents movement of the spout outside of a plane defined by the wall. When the spout would in use be pivotable about an axis parallel to the wall, the pipe member, when flexible along its length, may bend outwards when connected to the spout. Such an outward bending of the pipe member is disadvantageous, because it makes an even finish of the wall more difficult.

In an embodiment of the insert, the spout wall is connected to the box wall part by a first rib and a diametrically opposed second rib, the first rib and second rib being located on the pivot axis and allowing the spout wall to pivot relative to the box wall part about the single pivot axis.

In an embodiment of the insert, a first resilient wall section is provided between the first rib, the second rib, a first part of the first spout end of the spout wall, and a first part of the box wall part, and wherein a second resilient wall section is provided between the first rib, the second rib, a second part of the first spout end of the spout wall, and a second part of the box wall part,

In an embodiment of the insert, the first and second resilient wall sections provide a liquid tight seal and/or an air tight seal between the spout wall and the box wall part and maintain said seal when the spout wall pivots relative to the box wall part about the single pivot axis.

In an embodiment of the insert, the box wall part is a plate having a length between the first end and the second end of the box wall part, and a width, wherein the central longitudinal axis of the spout extends substantially centrally relative to the width, and eccentrically relative to the length. The box wall part, here the plate, is intended to close off the box wall opening of the installation box. The eccentric location of the spout relative to the box wall part provides more flexibility to the installation person, because it allows for two modes of installation.

In an embodiment of the insert, the first rib and second rib prevent a pivoting movement of the spout wall relative to the box wall part about an axis different than the single pivot axis, and/or wherein the first rib and second rib prevent a translational movement of the spout wall relative to the box wall part.

In an embodiment of the insert, the spout wall has a substantially circular cross-section.

In an embodiment of the insert, the spout wall comprises at least one yielding part configured to allow the internal cross-sectional area of the spout part, from the second spout end of the spout wall along at least part of the length of the spout, to vary between a first cross-sectional area, and a second cross-sectional area larger than the first cross-sectional area.

In an embodiment of the insert, the at least one yielding part is part of the spout wall.

In an embodiment of the insert, the at least one yielding part is connected to at least one of the first resilient wall section and the second resilient section.

In an embodiment of the insert, the spout wall comprises at least one stop member located on an inner side thereof, the stop member being configured to allow insertion of the pipe member into the spout part over a predetermined distance, and wherein the yielding part extends along the length of the spout at least over said predetermined distance.

In an embodiment of the insert, the box wall part, the spout wall, the first rib and the second rib are made of a relatively rigid, first material, and wherein the first and second resilient wall sections are made of a resilient, second material.

In an embodiment of the insert, the at least one yielding part is made of the resilient, second material.

In a second aspect of the invention, an electrical installation component is provided configured to be installed in a hole in a wall, the electrical installation component comprising:
- an installation box, the installation box having a box wall having a wall opening, and a front side configured to be substantially parallel with a wall into which the installation box is to be installed,
- an insert according to any one of the preceding claims connected to the box wall of the installation box, wherein the box wall part of the insert completely covers the box wall opening of the box wall, the wall hole of the box wall part being in communication with the box wall opening of the box wall, wherein the spout part is pivotable relative to the box wall part about the single pivot axis, wherein in use the single pivot axis is substantially perpendicular to the wall into which the installation box is to be installed.

In a further aspect of the invention, an installation box for an electrical installation is provided. The installation box comprises a box wall having a box wall opening and an elongate spout adjoining the box wall opening and extending outwardly therefrom, wherein the box wall opening has a central axis in a plane of the box wall, and wherein the spout comprises:
∘ a spout wall having a first spout end connected to the box wall and a free, second spout end,
∘ a central longitudinal axis extending substantially perpendicular to the central axis of the box wall opening,
∘ an internal cross-sectional area for accommodating a pipe member to be inserted into the spout part at the second end thereof,
wherein the spout wall is pivotable relative to the box wall about a single pivot axis, the pivot axis extending substantially parallel to the central axis of the box wall, wherein in use the single pivot axis is substantially perpendicular to the wall into which the installation box is to be installed.

In an embodiment of the installation box, the spout wall is connected to the box wall by a first rib and a diametrically opposed second rib, the first rib and second rib being located on the pivot axis and allowing the spout wall to pivot relative to the box wall about the single pivot axis.

In an embodiment of the installation box, a first resilient wall section is provided between the first rib, the second rib, a first part of the first spout end of the spout wall, and a first part of the box wall, and wherein a second resilient wall section is provided between the first rib, the second rib, a second part of the first spout end of the spout wall, and a second part of the box wall.

In an embodiment of the installation box, the first and second resilient wall sections providing a liquid tight seal and/or an air tight seal between the spout wall and the box wall and maintaining said seal when pivoting the spout wall relative to the box wall about the single pivot axis.

In an embodiment of the installation box, the first rib and second rib prevent a pivoting movement of the spout wall relative to the box wall about an axis different than the single pivot axis, and/or wherein the first rib and second rib prevent a translational movement of the spout wall relative to the box wall.

In an embodiment of the installation box, the spout wall comprises at least one yielding part configured to allow the internal cross-sectional area of the spout part, from the second end of the spout wall along at least part of the length of the spout, to vary between a first cross-sectional area, and a second cross-sectional area larger than the first cross-sectional area.

In an embodiment of the installation box, the spout wall comprises at least one stop member located on an inner side thereof, the stop member being configured to allow insertion of the pipe member into the spout part over a predetermined distance, and wherein the yielding part extends along the length of the spout at least over said predetermined distance.

In an embodiment of the installation box, the box wall, the spout wall, the first rib and the second rib are made of a relatively rigid, first material, and wherein the first and second resilient wall sections are made of a resilient, second material.

In an embodiment of the installation box, the at least one yielding part is made of the resilient, second material.

These and other aspects of the invention will be more readily appreciated as the same becomes better understood by reference to the following detailed description and considered in connection with the accompanying drawings in which like reference symbols designate like parts.

### BRIEF DESCRIPTION OF THE FIGURES

Figure 1 schematically shows a front view of an embodiment of an electrical installation component according to the invention comprising an embodiment of an insert according to the invention installed in a wall.
Figure 2 schematically shows a perspective view of the component comprising the insert of figure 1.
Figure 3 schematically shows a front view of the component comprising the insert of figure 1.
Figure 4 schematically shows a side view of the component comprising the insert of figure 1.
Figure 5 schematically shows a top view of the component comprising the insert of figure 1.

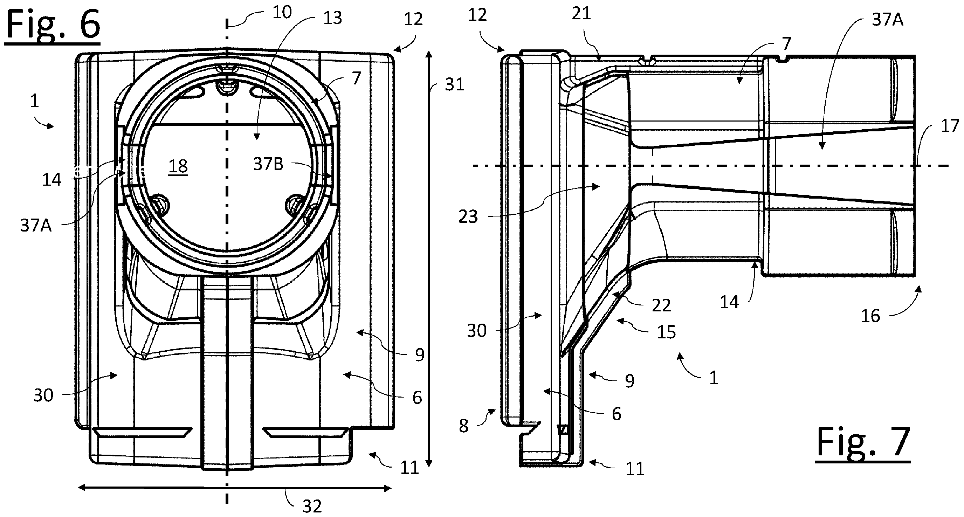

Figure 6 schematically shows a top view of the insert of figure 1.
Figure 7 schematically shows a side view of the insert of figure 1.

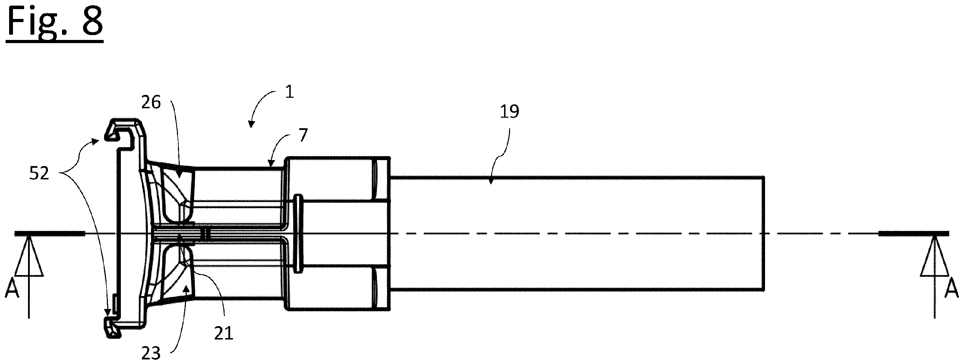

Figure 8 schematically shows a front view of the insert of figure 1 accommodating a pipe having a first cross-sectional area.
Figure 9 schematically shows a cross-sectional view of figure 8 along section A-A.
Figure 10 schematically shows a cross-sectional view of the insert of figure 1 accommodating a pipe having a second cross-sectional area larger than the first cross-sectional area.
Figure 11 schematically shows a cross-sectional view of the insert of figure 1 accommodating a pipe having a third cross-sectional area larger than the second cross-sectional area.

### DETAILED DESCRIPTION OF THE FIGURES

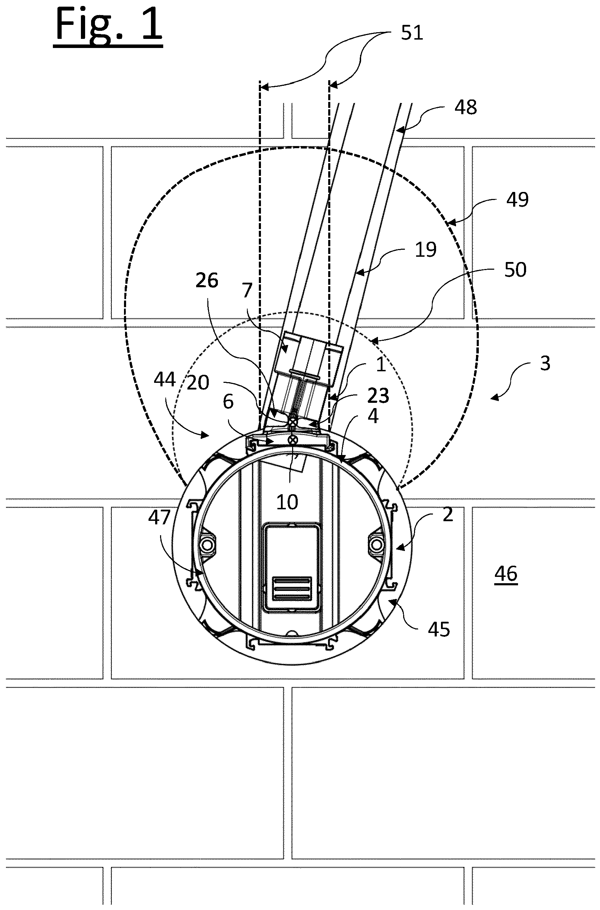

Figure 1 schematically shows an embodiment of electrical installation 3 comprising an installation box 2, an insert 1 connected to the installation box 2, and a pipe member 19 connected to the installation box 2 via the insert 1. The pipe member 19 generally accommodates one or more electrical cables and generally has a level of flexibility along its length 31.

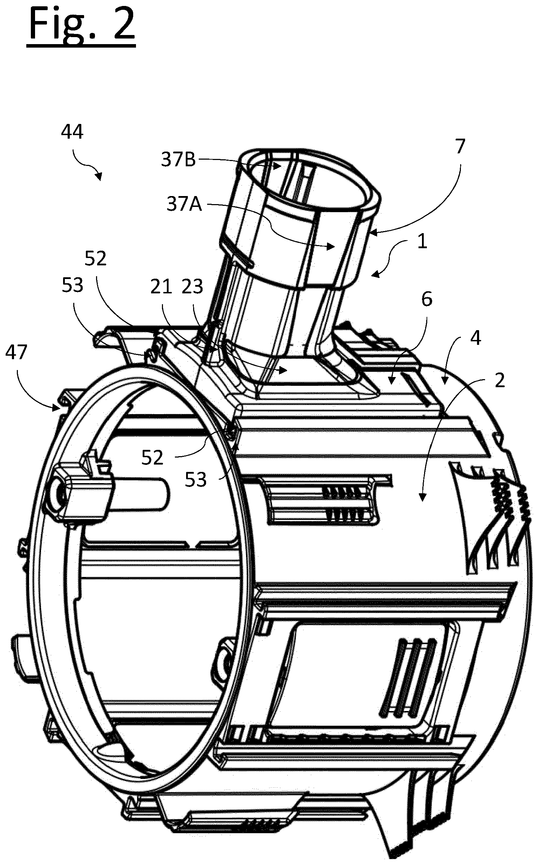

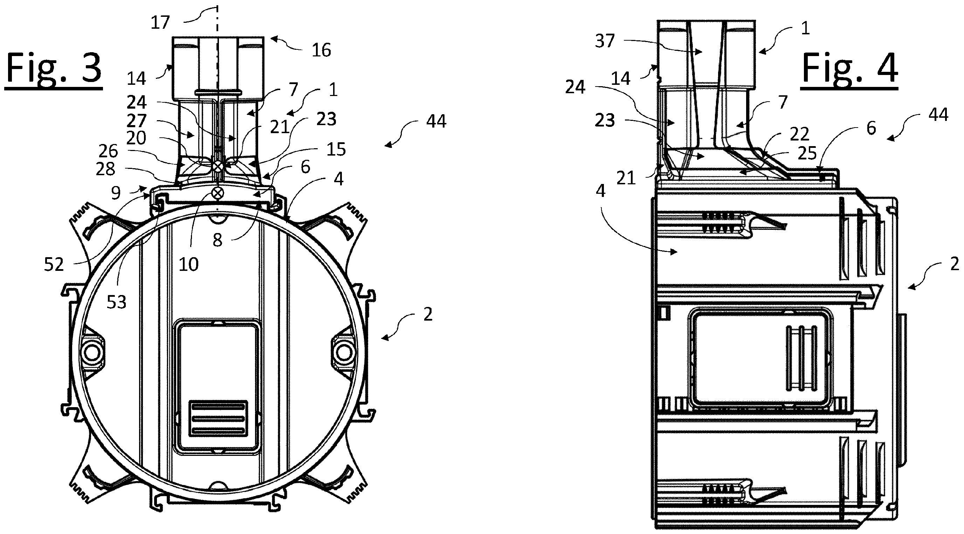

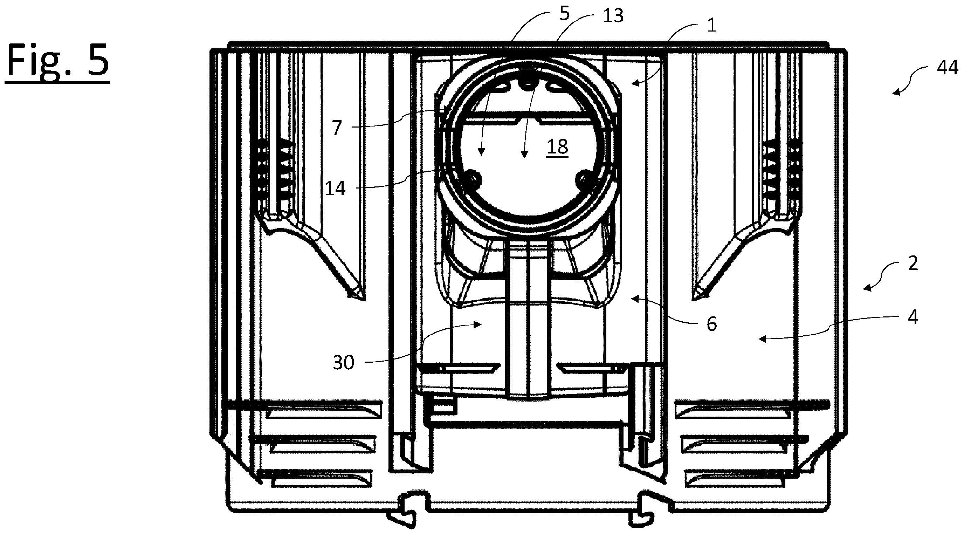

The installation box 2 and the insert 1 together as an installation component 44 are also shown in figures 2 to 5.

The installation box 2 comprises a box wall 4 having a box wall opening 5. The insert 1 comprises a box wall part 6 configured to the mounted on the box wall opening 5, and an elongate spout part 7.

The insert 1 has at least one insert connecting member 52 that connects to at least one box connecting member 53 provided on the box wall 4 of the installation box 2. As in the embodiment shown the insert connecting member 52 may be provided on the box wall part 6. The insert connecting member 52 and the box connecting member 53 are configured to slide along each other.

The box wall part 6 comprises a first side 8 configured to face the installation box 2 and a second side 9 opposite to the first side 8. A central axis 10 extends from a first end 11 to a second end 12 of the box wall part 6. The box wall part 6 has a wall hole 13 which overlaps with the box wall opening 5 when the box wall part 6 is mounted on the installation box 2.

The spout part 7 is connected to the second side 9 of the box wall part 6 and extends from said second side 9. The spout part 7 comprises a spout wall 14 having a first end 15 connected to the second side 9 of the box wall part 6 and a free, second end 16. A central longitudinal axis 17 extends substantially perpendicular to the central axis 10 of the box wall part 6. The spout part 7 has an internal cross-sectional area 18 for accommodating a pipe member 19 to be inserted into the spout part 7 at the second end 12 thereof. The spout wall 14 may have a substantially circular cross-section. Other shapes are however also possible, like a rectangle for example.

The box wall part 6 is a plate 30 having a length 31 between the first end 11 and the second end 12 of the box wall part 6, and a width 32. When connected, the plate 30 closes off the box wall opening 5 of the installation box 2. The central longitudinal axis 17 of the spout extends substantially centrally relative to the width 32, and eccentrically relative to the length 31.

The spout wall 14 is pivotable relative to the box wall part 6 about a single pivot axis 20. Said pivot axis 20 extends substantially parallel to the central axis 10 of the box wall part 6. Figures 2 to 5 show the spout part 7 in an unpivoted position. Figure 1 shows the spout part 7 in a pivoted position.

The pivoted position of the spout part 7 as shown in figure 1 allows the installation person to remove less material from the wall 46 in case of a misalignment between a milled slot 48 in the wall 46 for the pipe member 19 and the hole 45 in the wall 46 for the installation box 2. Figure 1 shows an example of such a misalignment, wherein the milled slot 48 for the pipe member 19 does not extend perpendicular from the box wall opening 5 of the installation box 2. A preferred milled slot 51 is shown by the dashed straight lines in figure 1, wherein the preferred milled slot does extend perpendicular from the box wall opening 5 in the installation box 2. For the preferred milled slot 51 substantially no extra material has to be removed from the wall 46 in order to connect the pipe member 19 to the installation box 2 via a spout.

In case a spout part 7 was used without any pivotability relative to the installation box 2, the installation person may had to remove a first wall part 49 indicated by a first dashed line in figure 1 in order to connect the pipe member 19 to the installation box 2 via the insert 1. With the insert 1 of the present invention or the electrical component 44 of the present invention the installation person may remove less material from the wall 46, because the spout wall 14 can pivot towards the pipe member 19. The less material to be removed with the present invention is indicated by a second dashed line 50 in figure 1. This may lead to a more efficient installation, because it requires less time compared to a non-pivotable spout.

The spout wall 14 is connected to the box wall part 6 by a first rib 21 and a diametrically opposed second rib 22. The first rib 21 and second rib 22 are located on the pivot axis 20 and allow the spout wall 14 to pivot relative to the box wall part 6 about the single pivot axis 20.

A first resilient wall section 23 is provided between the first rib 21, the second rib 22, a first part 24 of the first end 15 of the spout wall 14, and a first part 25 of the box wall part 6. A second resilient wall section 26 is provided between the first rib 21, the second rib 22, a second part 27 of the first end 15 of the spout wall 14, and a second part 28 of the box wall part 6.

The first and second resilient wall sections 23, 26 may provide a liquid tight seal and/or an air tight seal between the spout wall 14 and the box wall part 6 and maintain said seal when the spout wall 14 is pivoted relative to the box wall part 6 about the single pivot axis 20.

The first rib 21 and second rib 22 prevent a pivoting movement of the spout wall 14 relative to the box wall part 6 about an axis different than the single pivot axis 20.

The first rib 21 and second rib 22 prevent a translational movement of the spout wall 14 relative to the box wall part 6.

The box wall part 6, the spout wall 14, the first rib 21 and the second rib 22 are made of a relatively rigid, first material. The first and second resilient wall sections 23, 26 are made of a resilient, second material.

The spout wall 14 comprises at least one yielding part 37 configured to allow the internal cross-sectional area 18 of the spout part 7, from the second end 12 of the spout wall 14 along at least part of the length 31 of the spout, to vary between a first cross-sectional area 38, and a second cross-sectional area 39 larger than the first cross-sectional area 38. In the shown embodiment the spout wall 14 comprises two yielding parts 37A, 37B.

The at least one yielding part 37 is made of the resilient, second material. A first yielding part 37A goes over into the first resilient section 23. A second yielding part 37B goes over into the second resilient section 26. The at least one yielding part 37 may be part of the spout wall 14.

The at least one yielding part 37 is connected to at least one of the first resilient wall section 23 and the second resilient section. In the shown embodiments the spout wall 14 comprises a first yielding part 37A which is connected to the first resilient wall section 23, and a second yielding part 37B which is connected to the second resilient wall section 26.

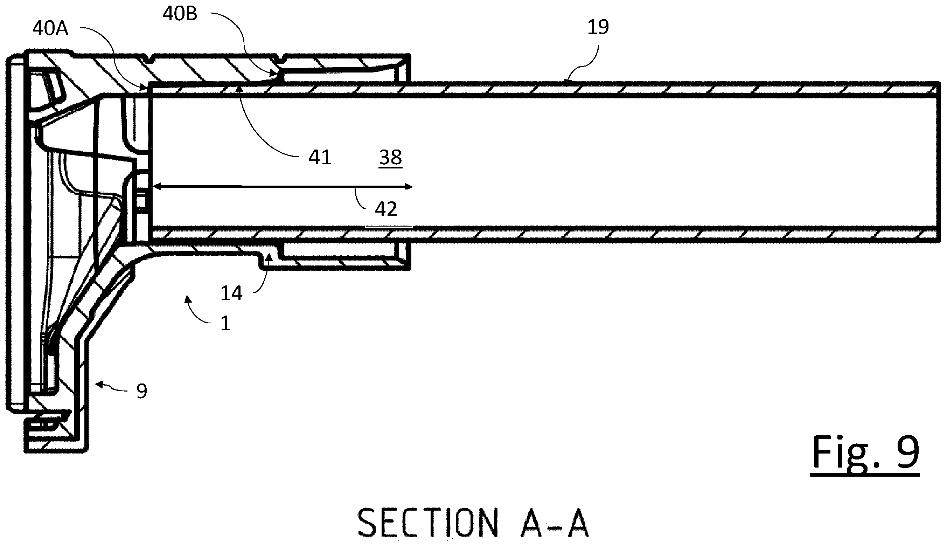

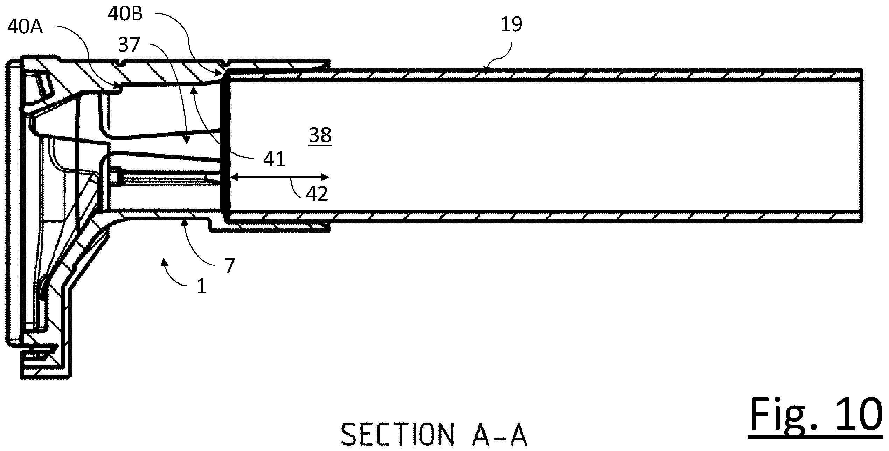

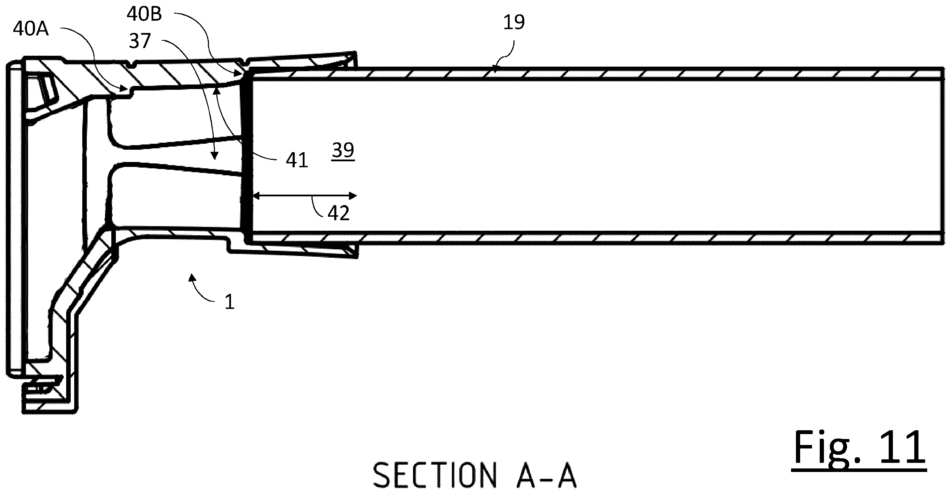

The spout wall 14 comprises at least one stop member 40A, 40B located on an inner side 41 thereof, see figures 9 to 11. The stop member 40A, 40B allows insertion of the pipe member 19 into the spout part 7 over a predetermined distance 42. The at least one yielding part 37 extends along the length 31 of the spout at least over said predetermined distance 42.

The present invention further relates to an electrical installation component 44 as shown in figures 1 to 5 configured to be installed in a hole 45 in a wall 46. The electrical installation component 44 comprises an installation box 2 and an insert 1 according to the invention.

The installation box 2 has a box wall 4 having a wall opening, and a front side 47 configured to be substantially parallel with a wall 46 into which the installation box 2 is to be installed.

The insert 1 of the electrical component 44 is connected to the box wall 4 of the installation box 2. The box wall part 6 of the insert 1 completely covers the box wall opening 5 of the box wall 4. The wall hole 13 of the box wall part 6 is in communication with the box wall opening 5 of the box wall 4. The spout part 7 is pivotable relative to the box wall part 6 about the single pivot axis 20, wherein in use the single pivot axis 20 is substantially perpendicular to the wall into which the installation box 2 is to be installed, as shown in figure 1.

The present invention also provides an installation box 2 for an electrical installation 3. The installation box 2 comprises a box wall 4 having a box wall opening 5 and an elongate spout adjoining the box wall opening 5 and extending outwardly therefrom. So instead of an insert 1 having a spout, the spout is directly, or integrally connected to the installation box 2. The box wall opening 5 has a central axis 10 in a plane of the box wall 4.

The spout comprises a spout wall 14 having a first end 15 connected to the box wall 4 and a free, second end 16. The spout has a central longitudinal axis 17 extending substantially perpendicular to the central axis 10 of the box wall opening 5, i.e. when the spout is in a non-pivoted position. The spout has an internal cross-sectional area 18 for accommodating a pipe member 19 to be inserted into the spout part 7 at the second end 12 thereof.

The spout wall 14 is pivotable relative to the box wall 4 about a single pivot axis 20, the pivot axis 20 extending substantially parallel to the central axis 10 of the box wall 4.

The spout wall 14 is connected to the box wall 4 by a first rib 21 and a diametrically opposed second rib 22, the first rib 21 and second rib 22 being located on the pivot axis 20 and allowing the spout wall 14 to pivot relative to the box wall 4 about the single pivot axis 20.

A first resilient wall section 23 is provided between the first rib 21, the second rib 22, a first part 24 of the first end 15 of the spout wall 14, and a first part 25 of the box wall 4. A second resilient wall section 26 is provided between the first rib 21, the second rib 22, a second part 27 of the first end 15 of the spout wall 14, and a second part 28 of the box wall 4.

The first and second resilient wall sections 23, 26 may provide a liquid tight seal and/or an air tight seal between the spout wall 14 and the box wall 4 and maintain said fluid tight seal when the spout wall 14 is pivoted relative to the box wall 4 about the single pivot axis 20.

The first rib 21 and second rib 22 prevent a pivoting movement of the spout wall 14 relative to the box wall 4 about an axis different than the single pivot axis 20. The first rib 21 and second rib 22 prevent a translational movement of the spout wall 14 relative to the box wall 4.

Similar to the insert 1, the spout wall 14 comprises at least one yielding part 37 configured to allow the internal cross-sectional area 18 of the spout part 7, from the second end 12 of the spout wall 14 along at least part of the length 31 of the spout, to vary between a first cross-sectional area 38, and a second cross-sectional area 39 larger than the first cross-sectional area 38.

The spout wall 14 may, just as for the insert 1, also comprise at least one stop member 40A, 40B located on an inner side 41 thereof. The stop member 40A, 40B allows insertion of the pipe member 19 into the spout part 7 over a predetermined distance 42. The yielding part extends along the length 31 of the spout at least over said predetermined distance 42.

The box wall 4, the spout wall 14, the first rib 21 and the second rib 22 are made of a relatively rigid, first material. The first and second resilient wall sections 23, 26 are made of a resilient, second material. The at least one yielding part 37 may also be made of the resilient, second material.

The insert 1, installation box 2 with integrated insert 1, and electrical installation component 44 may be used for different types of walls, such as brick walls, hollow walls, or other type of walls.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

## Claims

1. Insert (1) for an installation box (2) for an electrical installation (3), the installation box having a box wall (4) having a box wall opening (5), wherein the insert comprises a box wall part (6) configured to the mounted on the box wall opening, and an elongate spout part (7), wherein:
- the box wall part comprises:
∘ a first side (8) configured to face the installation box and
∘ a second side (9) opposite to the first side,
∘ a central axis (10) extending from a first end (11) to a second end (12) of the box wall part,
∘ a wall hole (13), the wall hole being configured to overlap with the box wall opening when the box wall part is mounted on the installation box,
- the spout part is connected to the second side of the box wall part and extends from said second side, the spout part comprising:
∘ a spout wall (14) having a first spout end (15) connected to the second side of the box wall part and a free, second spout end (16),
∘ a central longitudinal axis (17) extending substantially perpendicular to the central axis of the box wall part,
∘ an internal cross-sectional area (18) for accommodating a pipe member (19) to be inserted into the spout part at the second end thereof,
wherein the spout wall is pivotable relative to the box wall part about a single pivot axis (20), the pivot axis extending substantially parallel to the central axis of the box wall part, wherein in use the single pivot axis is substantially perpendicular to the wall into which the installation box is to be installed.

2. Insert according to claim 1, wherein the spout wall is connected to the box wall part by a first rib (21) and a diametrically opposed second rib (22), the first rib and second rib being located on the pivot axis and allowing the spout wall to pivot relative to the box wall part about the single pivot axis.

3. Insert according to claim 2, wherein a first resilient wall section (23) is provided between the first rib, the second rib, a first part (24) of the first end of the spout wall, and a first part (25) of the box wall part, and wherein a second resilient wall section (26) is provided between the first rib, the second rib, a second part (27) of the first end of the spout wall, and a second part (28) of the box wall part.

4. Insert according to claim 3, wherein the first and second resilient wall sections provide a liquid tight seal and/or an air tight seal between the spout wall and the box wall part and maintain said seal when the spout wall pivots relative to the box wall part about the single pivot axis.

5. Insert according to any one of the preceding claims, wherein the box wall part is a plate (30 having a length (31) between the first end and the second end of the box wall part, and a width (32), wherein the central longitudinal axis of the spout extends substantially centrally relative to the width, and eccentrically relative to the length.

6. Insert according to any one of claims 2-5, wherein the first rib and second rib prevent a pivoting movement of the spout wall relative to the box wall part about an axis different than the single pivot axis, and/or wherein the first rib and second rib prevent a translational movement of the spout wall relative to the box wall part.

7. Insert according to any one of the preceding claims, wherein the spout wall comprises at least one yielding part (37) configured to allow the internal cross-sectional area of the spout part, from the second end of the spout wall along at least part of the length of the spout, to vary between a first cross-sectional area (38), and a second cross-sectional area (39) larger than the first cross-sectional area.

8. Insert according to any one of claims 3-7, wherein the box wall part, the spout wall, the first rib and the second rib are made of a relatively rigid, first material, and wherein the first and second resilient wall sections are made of a resilient, second material.

9. Electrical installation component (44) configured to be installed in a hole (45) in a wall (46), the electrical installation component comprising:
- an installation box (2), the installation box having a box wall having a wall opening, and a front side (47) configured to be substantially parallel with a wall into which the installation box is to be installed,
- an insert (1) according to any one of the preceding claims connected to the box wall of the installation box, wherein the box wall part of the insert completely covers the box wall opening of the box wall, the wall hole of the box wall part being in communication with the box wall opening of the box wall, wherein the spout part is pivotable relative to the box wall part about the single pivot axis, wherein in use the single pivot axis is substantially perpendicular to the wall into which the installation box is to be installed.

10. Installation box (2) for an electrical installation, the installation box comprising a box wall having a box wall opening and an elongate spout adjoining the box wall opening and extending outwardly therefrom, wherein the box wall opening has a central axis in a plane of the box wall, and wherein the spout comprises:
∘ a spout wall having a first end connected to the box wall and a free, second end,
∘ a central longitudinal axis extending substantially perpendicular to the central axis of the box wall opening,
∘ an internal cross-sectional area for accommodating a pipe member to be inserted into the spout part at the second end thereof,
wherein the spout wall is pivotable relative to the box wall about a single pivot axis, the pivot axis extending substantially parallel to the central axis of the box wall, wherein in use the single pivot axis is substantially perpendicular to the wall into which the installation box is to be installed.

11. Installation box according to claim 10, wherein the spout wall is connected to the box wall by a first rib and a diametrically opposed second rib, the first rib and second rib being located on the pivot axis and allowing the spout wall to pivot relative to the box wall about the single pivot axis.

12. Installation box according to claim 11, wherein a first resilient wall section is provided between the first rib, the second rib, a first part of the first end of the spout wall, and a first part of the box wall, and wherein a second resilient wall section is provided between the first rib, the second rib, a second part of the first end of the spout wall, and a second part of the box wall.

13. Installation box according to the preceding claim, wherein the first and second resilient wall sections provide a liquid tight seal and/or an air tight seal between the spout wall and the box wall and maintain said seal when the spout wall pivots relative to the box wall about the single pivot axis.

14. Installation box according to any one of claims 10 - 13, wherein the first rib and second rib prevent a pivoting movement of the spout wall relative to the box wall about an axis different than the single pivot axis, and/or wherein the first rib and second rib prevent a translational movement of the spout wall relative to the box wall.

15. Installation box according to any one of claims 12 - 14, wherein the box wall, the spout wall, the first rib and the second rib are made of a relatively rigid, first material, and wherein the first and second resilient wall sections are made of a resilient, second material.
